(19) Europäisches Patentamt
European Patent Office
Office européen des brevets

(11) Veröffentlichungsnummer: **0 072 437 B1**

(12) **EUROPÄISCHE PATENTSCHRIFT**

(45) Veröffentlichungstag der Patentschrift: **07.01.87**

(51) Int. Cl.⁴: **C 01 G 49/00,** C 01 G 51/00, C 01 G 53/00, C 04 B 35/00, H 01 F 1/11

(21) Anmeldenummer: **82106388.0**

(22) Anmeldetag: **16.07.82**

(54) **Verfahren zur Herstellung feinteiliger Ferritpulver.**

(30) Priorität: **19.08.81 DE 3132678**
**19.08.81 DE 3132681**
**19.08.81 DE 3132683**

(43) Veröffentlichungstag der Anmeldung: **23.02.83 Patentblatt 83/8**

(45) Bekanntmachung des Hinweises auf die Patenterteilung: **07.01.87 Patentblatt 87/2**

(84) Benannte Vertragsstaaten: **DE FR GB IT NL**

(56) Entgegenhaltungen:
**DE - A - 2 828 700**
**DE - A - 3 041 960**
**FR - A - 2 242 347**

(73) Patentinhaber: **BASF Aktiengesellschaft, Carl-Bosch-Strasse 38, D-6700 Ludwigshafen (DE)**

(72) Erfinder: **Hibst, Hartmut, Dr., Sternstrasse 215, D-6700 Ludwigshafen (DE)**

EP 0 072 437 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von feinteiligen Ferriten der allgemeinen Formel

$$MeFe_2O_4 \qquad (I)$$

in der $Me = AMn + bNi + cZn + dCo + eFe(II)$ bedeutet, wobei die Atommassenverhältnisse a, b, c, d und e jeweils 0 bis 1 betragen und ihre Summe gleich 1 ist,

$$M^1{}_2Me^1{}_2Fe_{12}O_{22} \qquad (II)$$

in der $M^1$ Barium, Strontium, Calcium und/oder Blei und $Me^1$ zweiwertiges Mangan, Kupfer, Eisen, Kobalt, Nickel, Zink, Magnesium und/oder äquimolare Mengen von Lithium und dreiwertigen Eisen bedeuten, oder

$$M^2(Me^2Ti)_xFe_{12-2x}O_{19} \qquad (III)$$

in der $M^2$ Barium oder Strontium, $Me^2$ Zink, Nickel und/oder Kobalt und x Werte von 0 bis 2,0 bedeuten.

Weichmagnetische Maganzinkferrit- und Nikkelzinkferritpulver vom Typ der Formel (I) für die Herstellung von Magnetkopfkeramik sowie für die Herstellung von Abschirmmaterialien werden üblicherweise nach dem keramischen Verfahren hergestellt. Dazu wird Manganoxid oder Nickeloxid mit Zinkoxid und Eisen(III)-Oxid in dem Verhältnis, das der chemischen Formel des späteren Ferrits entspricht, gemischt und diese Mischung einer Wärmebehandlung bei Temperaturen zwischen 1100 und 1200 °C unterworfen. Dabei bildet sich der weichmagnetische Spinellferrit. Die entstandenen versinterten Konglomerate aus Kristalliten werden anschliessend meist unter Zusatz von Wasser zu einem Pulver, dessen Teilchengrösse rund 1μm beträgt, gemahlen. Durch das Mahlen entstehen Kristallbaufehler in den Teilchen, die eine Verschlechterung der magnetischen Eigenschaften zur Folge haben. Ausserdem weisen die gemahlenen Ferritpulver ein breites Teilchengrössenspektrum auf. Entsprechend wird bei der Weiterverarbeitung dieser Pulver zu einer weichmagnetischen Ferritkeramik i.a. ein breites Korngrössenspektrum beobachtet.

Neben dem keramischen Verfahren sind zur Herstellung von MnZn- und NiZn-Ferriten auch Mischfällungsverfahren herangezogen worden. Diese Verfahren haben den Nachteil, dass das in der flüssigen Phase erhaltene Mischfällungsprodukt zu feinteilig und daher nur sehr schwierig von der flüssigen Phase abzutrennen ist. Da hierbei ausserdem feinteilige Fällungsprodukte durchs Filter laufen können, ist es schwierig, Fällungsprodukte mit einer Zusammensetzung zu erzielen, die den festgelegten Molverhältnissen der jeweiligen Komponenten entsprechen. Weiterhin ist es nachteilig, dass die erhaltenen Ferrite aufgrund der Versinterung beim Tempern schlecht dispergierbar sind und für eine weitere Verwendung aufgemahlen werden müssen.

Weiterhin ist bekannt, Ferrite vom Spinelltyp der Zusammensetzung $MeFe_2O_4$ durch Oxidation von Me-Fe(II)-Hydroxidmischfällungen aus wässriger Lösung darzustellen. Die so hergestellten Ferrite sind aber sehr feinteilig und ergeben bei einer Verdichtung einen Pressling mit unzureichenden, vergleichsweise niedrigen Dichten.

Für die Herstellung von Magnetkeramik und von weichmagnetischen Plastoferriten ist es wünschenswert, isotrope Ferritpulver vom Spinelltyp zur Verfügung zu haben, welche sich durch eine enge Teilchengrössenverteilung, eine hohe Verdichtbarkeit und eine gute Dispergierbarkeit für die Einarbeitung in organischen Bindemittel auszeichnen.

Die hexagonale $Me_2Y$-Ferritphase der Zusammensetzung $M^1{}_2Me^1{}_2$–$Fe_{12}O_{22}$ (Formel II) mit $M^1$ = Ba, Sr, Ca, Pb und $Me^1$ = Mn(II), Cu(II), Fe(II), Co(II), Ni(II), Zn, Mg, (Li + Fe(III))/2 für die Herstellung von Magnetkeramik für die Hochfrequenztechnik wird üblicherweise auch nach dem keramischen Verfahren hergestellt. Dazu werden $M^1CO_3$, $Me^1CO_3$ oder $Me^1O$ und Eisenoxid in dem Verhältnis, das der chemischen Formel des späteren Ferrits entspricht, gemischt und diese Mischung einer Wärmebehandlung, dem Vorsintern, bei Temperaturen zwischen 1100 und 1300 °C unterworfen. Die entstandenen, stark versinterten Konglomerate aus plättchenförmigen Kristalliten werden anschliessend meist unter Zusatz von Wasser zu einem Pulver mit einer Teilchengrösse von rund 1μm zermahlen. Durch das Mahlen werden aber die gebildeten Plättchen zu einem grossen Teil zerstört und nur ein Pulver mit breiter Teilchengrössenverteilung erhalten.

Daneben sind zur Herstellung des $Me^1{}_2Y$-Ferrits auch Mischfällungsverfahren herangezogen worden. So sind in den japanischen Offenlegungsschriften 50 106 899 und 50 039 700 Verfahren beschrieben, bei denen die gelösten Metallkationen mit organischen Komplexbildnern in ammoniakalischer Lösung als schwerlösliche metallorganische Verbindungen ausgefällt, abfiltriert und ausgewaschen werden. Der getrocknete Niederschlag wird anschliessend bei 1100 bis 1300 °C getempert. Von T.-O. Kim et al. ist in J. Korean. Ceram. Soc. 1979, 16 (2), 89–98, ein Verfahren beschrieben, bei dem eine $BaCl_2$-, $Zn(NO_3)_2$- und $FeCl_3$-haltige wässrige Lösung mit einer NaOH-$Na_2CO_3$-Lösung gefällt, ausgewaschen, gefriergetrocknet und anschliessend getempert wird. Die so erhaltenen Pulver enthalten zwar als Hauptkomponente den gewünschten $Zn_2Y$-Ferrit, sind aber nicht phasenrein. Ausserdem ist das Verfahren der Gefriertrocknung sehr teuer und unwirtschaftlich. Die genannten Mischfällungsverfahren haben ausserdem den Nachteil, dass das in der flüssigen Phase erhaltene Mischfällungsprodukt feinteilig und daher nur schwierig von der flüssigen Phase abzutrennen ist. Da beim Filtrieren und anschliessenden Auswaschen feinteilige Fällungsprodukte durchs Filter laufen können, ist es schwierig, Fällungsprodukte mit einer Zusammensetzung zu erzielen, die den festgelegten Molverhältnissen der jeweiligen Komponenten entsprechen. Wegen dieser Mängel wurden diese Verfahren bisher gewerblich nicht realisiert. Weiterhin ist es nachteilig, dass die erhaltenen Ferrite aufgrund der Versinterung beim Tempern für die weitere Verwendung aufgemahlen werden müssen.

Mischfällungen führen im allgemeinen zu einem innigen Kontakt der Reaktionskomponenten und bewirken so eine Reaktionsbeschleunigung. Andererseits sind auch Fluxverfahren bekannt, bei denen Flussmittel zur Förderung der Reaktion zwischen den einzelnen Metalloxiden eingesetzt werden. So können $Me^1_2Y$-Ferrite aus Natriumferritschmelzen [A. Tauber et al., J. Appl. Phys., Suppl. 33, 1381 S (1962)] oder Bariumboratschmelzen [A. Tauber et al., A. Appl. Phys. 35 (1964) 1008, Part 2] auskristallisiert werden. Die Verfahren erfordern jedoch Temperaturen von 1200 °C und höher.

Für verschiedene Anwendungen der Hochfrequenztechnik ist es wünschenswert, ein $Me^1_2Y$-Pulver zur Verfügung zu haben, dessen plättchenförmige Teilchen im Magnetfeld gut ausrichtbar sind und das durch Sintern zu einer hochdichten weichmagnetischen Keramik verarbeitet werden kann. Ausserdem ist es wünschenswert, ein Pulver zur Verfügung zu haben, das sich leicht in Kunststoff oder Gummi einarbeiten lässt. So hergestellte, weichmagnetische Plastoferrite können z.B. Radiowellen absorbieren und sind für Abschirmungszwecke von Interesse. Ausserdem ist es wünschenswert, ein $Me^1_2Y$-Pulver zur Verfügung zu haben, das sich gut in einen Lack eindispergieren lässt, wobei eine weichmagnetische Farbe für Abschirmungszwecke erhalten wird.

Es war daher wünschenswert, ein einfaches und billiges Verfahren zur Herstellung eines hexagonalen $Me^1_2Y$-Ferritpulvers bereitzustellen, mit welchem ein Produkt erhältlich ist, das den obengenannten Anforderungen genügt. Ein solches hexagonales, weichmagnetisches Ferritpulver sollte sich durch Einphasigkeit, eine enge Teilchengrössenverteilung, eine gute Dispergierbarkeit für die Einarbeitung in organische Bindemittel und eine gute Ausrichtbarkeit in einem Magnetfeld auszeichnen.

Auch die Ferritpulver der Formel (III) für die Herstellung von Hartferritmagneten sowie von weitgehend fälschungssicheren magnetischen Aufzeichnungen werden üblicherweise nach dem keramischen Verfahren hergestellt. Dazu werden Bariumcarbonat bzw. Strontiumcarbonat und Eisenoxid in dem Verhältnis, das der chemischen Formel des späteren Ferrits entspricht, gemischt und diese Mischung einer Wärmebehandlung, dem sogenannten Vorsintern, bei Temperaturen zwischen 1100 °C und 1300 °C unterworfen. Beim Vorsintern bildet sich der magnetische Hexaferrit. Die entstandenen versinterten Konglomerate aus Kristalliten werden anschliessend meist unter Zusatz von Wasser zu einem Pulver, dessen Teilchengrösse rund 1 μm beträgt, gemahlen. Durch das Mahlen entstehen Kristallbaufehler in den Teilchen, die eine Erniedrigung der Koerzitivität zur Folge haben. So hergestellte Ferritpulver weisen im allgemeinen eine recht gute spezifische remanente Magnetisierung auf, die Magnetisierungskoerzitivfeldstärke $_JH_c$ liegt aber mit etwa 200 KA/m vor dem Mahlen und 150 KA/m nach dem Mahlen recht niedrig. Diese durch das Mahlen hervorgerufenen Kristallbaudefekte lassen sich durch ein Tempern nach dem Mahlen oder durch einen Sinterprozess nur zum Teil ausheilen. Deshalb zeigen die aus gemahlenen hartmagnetischem Bariumferritpulver hergestellten Magnete, wie sie in der Technik heute benutzt werden, $_JH_c$-Werte von nur 280 bis 320 kA/m. Ausserdem weisen die gemahlenen Ferritpulver ein breites Teilchengrössenspektrum auf.

Ein anderes Verfahren wird z.B. in der DE-OS 2 832 892 beschrieben. Hier wird eine Ba–Fe(III)-Nitratlösung in einem Sprühturm gegen ein Heizgas mit einer Temperatur von 1200 °C versprüht. An dem Verfahren ist nachteilig, dass das so hergestellte Ba-Ferritpulver mit $\alpha$-$Fe_2O_3$ verunreinigt ist, wodurch Sättigungs- und remanente Magnetisierung gegenüber einphasigem Ferrit erniedrigt sind. Zum anderen sind die anfallenden Kristallite teilweise miteinander versintert, so dass das Pulver vor einer weiteren Verwendung aufgemahlen werden muss.

Neben den obengenannten Verfahren sind zur Herstellung von Barium- und Strontiumferriten auch Mischfällungsverfahren herangezogen worden. So beschreiben K. Haneda et al. in J. Amer. Ceram. Soc. 57 (8) (1974) 354/7 die Darstellung von hochkoerzitivem Bariumferrit durch Tempern einer abfiltrierten, ausgewaschenen und getrockneten $BaCO_3$–$Fe(OH)_3$-Mischfällung bei 925 °C. Die Mischfällung wurde durch Zusammengeben einer Ba–Fe(III)-Chloridlösung und einer NaOH-$Na_2CO_3$-Lösung mit fast 4-fachem Alkaliüberschuss hergestellt. Ein weiteres Mischfällungsverfahren aus Ba–Fe(III)-Chloridlösung und überschüssiger $Na_2CO_3$-Lösung wird in der DE-A-1 948 114 (US-A-3 582 266) offenbart. Das zusammen ausgefällte Ba und Fe(III)-Carbonat wird filtriert, ausgewaschen, sprühgetrocknet und bei 1100 °C getempert. Der Überschuss an $Na_2CO_3$ dient dazu, um nach der Filtration eine wirksame Entfernung von Salzanteilen zu ermöglichen. Die erforderlichen hohen Temperaturen bei der Temperung ergeben jedoch grobteilige Ferritpulver mit einer Teilchengrösse von 0,5 bis 1,0 μm und $H_c$-Werten, die auch mit dem keramischen Verfahren erreicht werden können. Ein weiteres Mischfällungsverfahren ist aus der GB-A-1 254 390 (US-A-1 634 254) bekannt. Dabei werden die Kationen einer ammoniakalischen Ba–Fe(III)-Nitratlösung mit einem Ammoniumsalz einer Fettsäure ausgefällt. Auch hier ist eine Temperung mit den dadurch bedingten nachteiligen Folgen auf das Teilchengrössenspektrum erforderlich.

Diese genannten Verfahren haben den Nachteil, dass das in der flüssigen Phase erhaltene Mischfällungsprodukt zu feinteilig und daher nur sehr schwierig von der flüssigen Phase abzutrennen ist. Da hierbei ausserdem das gefällte feinteilige Ba-Salz teilweise durchs Filter läuft, ist es schwierig, Fällungsprodukte mit einer Zusammensetzung zu erzielen, die den festgelegten Molverhältnissen der jeweiligen Komponenten entsprechen. Wegen dieser Mängel wurden diese Verfahren bisher gewerblich nicht realisiert. Weiterhin ist es nachteilig, dass die erhaltenen Ferrite aufgrund der Versinterung beim Tempern schlecht dispergierbar sind und für eine weitere Verwendung aufgemahlen werden müssen.

Um den Nachteil der schlechten Filtrierbarkeit zu beheben, wird in der DE-B-2 738 830 (US-A-4 120 807) vorgeschlagen, bei der Mischfällung ein grobteiliges $Fe_3O_4$ und $BaCO_3$ mit einer Teilchengrösse von 0,5 bis 0,7 µm zu erzeugen. Der nach dem Tempern bei 400 bis 900 °C entstehende Ba-Ferrit ist allerdings mit einem Kristallitdurchmesser von 0,5 bis 0,9 µm relativ grobteilig und fällt z.T. in versinterter Form an.

Mischfällungen führen im allgemeinen zu einem innigen Kontakt der Reaktionskomponenten und bewirken so eine Reaktionsbeschleunigung. Andererseits sind auch Fluxverfahren bekannt, bei denen Flussmittel zur Förderung der Reaktion zwischen den einzelnen Metalloxiden eingesetzt werden, wie z.B. $B_2O_3$, Alkaliborate, PbO, Alkaliferrite, $Bi_2O_3$, Molybdate, Alkalihalogenide und -sulfate.

So wird nach der US-A-3 793 443 Bariumferrit durch Erhitzen eines $BaCO_3$-FeOOH–NaCl–KCl-Gemenges dargestellt. Dabei wird es als wichtig angesehen, von FeOOH als Eisenkomponente auszugehen, um die Ferritbildungsreaktion in Gegenwart von «in situ» erzeugtem $H_2O$ durchzuführen. Ausserdem wird eine vollständige Ferritbildung nur bei hohen Temperaturen, weit oberhalb des Schmelzpunktes der zugegebenen Alkalichloride (d.h. bei 1000 °C) beobachtet. Tiefere Temperaturen führen zu geringen Ba-Ferritausbeuten. Das Verfahren bringt gegenüber der keramischen Methode keine Verbesserung in der Koerzitivkraft. Ausserdem fallen die Teilchen mit einem Kristallitdurchmesser von ca. 1 bis 1,5 µm in relativ grobteiliger Form an. Nach dem Verfahren der DE-A-2 401 029 (US-A-3 810 973) wird eine Suspension von Eisen(III)-oxid-hydrat in einer Alkalichloridlösung mit $BaCO_3$-Pulver versetzt und dann sprühgetrocknet und bei 1000 bis 1050 °C getempert. Das Verfahren führt zu einem relativ grobteiligen hexagonalen Ferrit mit einem Kristalldurchmesser von ca. 1 bis 1,5 µm. In der DE-A-2 143 793 wird ein Verfahren zur Herstellung von Bariumferrit beschrieben, bei dem ein $BaCO_3$–$Fe_2O_3$–$Na_2SO_4$–$K_2SO_4$-Gemenge auf 950 °C erhitzt wird. Auch dieses Verfahren ergibt grobteilige Ferritpräparate. In einem anderen in der FR-A-2 242 347 offenbarten Verfahren wird zur Herstellung von Ferriten vom Magnetoplumbit-Typ ein festes Gemenge aus Barium (oder Strontium)sulfat, Eisen(III)oxid oder einer zu Eisen-(III)oxid pyrolisierbaren Eisenverbindung und Alkali(oxid) erhitzt. Diese Vorgehensweise hat jedoch den Nachteil, dass der für eine Herstellung einphasiger Ferrite nötige Überschuss an Erdalkaliverbindung als schwerlösliches Sulfat vorliegt und durch Auswaschen mit Wasser oder verdünnten Säuren nicht entfernbar ist. Dieses unmagnetische Material beeinträchtigt aber die magnetischen Eigenschaften des Endproduktes.

Für eine Reihe von Anwendungen auf dem Gebiet der fälschungssicheren Codierung, z.B. bei Identitätsausweisen, Kreditkarten sowie magnetische Speicherung von sonstigen Kennungen, ist es wünschenswert, magnetische Aufzeichnungsträger zur Verfügung zu haben, welche eine gegenüber den derzeitigen Standardspeichermedien höhere Koerzitivfeldstärke aufweisen. Entsprechende Materialien wären gegenüber magnetischen Fremdfeldern unempfindlicher und somit nur unter erschwerten Bedingungen zu fälschen.

Aufgabe der Erfindung war es daher, ein einfaches und wirtschaftliches Verfahren zur Herstellung der angegebenen Ferrite bereitzustellen, mit dem die jeweiligen Anforderungen an die resultierenden Ferrite erfüllt werden können. Die nach dem anzugebenden Verfahren erhältlichen Ferrite sollten sich vor allem durch eine hohe Feinteiligkeit bei enger Teilchengrössenverteilung und durch eine gute Dispergierbarkeit für die Einarbeitung in organische Bindemittel auszeichnen. Darüber hinaus sollten die hartmagnetischen Ferrite eine hohe und in einfacher Weise definiert einstellbare Koerzitivfeldstärke aufweisen.

Es wurde nun überraschenderweise gefunden, dass sich die feinteiligen Ferrite der allgemeinen Formel

$$MeFe_2O_4 \qquad (I)$$

in der Me = aMn + bNi + cZn + dCo + eFe(II) bedeutet, wobei die Atommassenverhältnisse a, b, c, d und e jeweils 0 bis 1 betragen und ihre Summe gleich 1 ist,

$$M^1_2Me^1_2Fe_{12}O_{22} \qquad (II)$$

in der $M^1$ Barium, Strontium, Calcium und/oder Blei und $Me^1$ zweiwertiges Mangan, Kupfer, Eisen, Kobalt, Nickel, Zink, Magnesium und/oder äquimolare Mengen von Lithium und dreiwertigem Eisen bedeuten, oder

$$M^2(Me^2Ti)_xFe_{12-2x}O_{19} \qquad (III)$$

in der $M^2$ Barium oder Strontium, $Me^2$ Zink, Nickel und/oder Kobalt und x Werte von 0 bis 2,0 bedeuten, entsprechend den gestellten Anforderungen herstellen lassen, wenn die für die jeweilige, den Formeln (I), (II) oder (III) entsprechende Zusammensetzung erforderlichen Me, $Me^1$, $Me^2$, $M^1$ und/oder $M^2$-Salze sowie gegebenenfalls eine Titanverbindung zusammen mit Eisen(III)chlorid und Natrium- und/oder Kaliumcarbonat vermischt, das erhaltene Gemenge auf eine Temperatur zwischen 700 und 1200 °C erhitzt und der sich dabei bildende feinteilige Ferrit der vorgegebenen Zusammensetzung durch Auslaugen mit Wasser isoliert wird.

Insbesondere lassen sich mit dem erfindungsgemässen Verfahren isotrope Ferritpulver mit Spinellstruktur der allgemeinen Formel (I) $MeFe_2O_4$,

in der Me = aMn + bNi + cZN + dCo + eFe(II) bedeutet, wobei die Atommassenverhältnisse a, b, c, d und e jeweils 0 bis 1 betragen und ihre Summe gleich 1 ist, mit den aufgabengemäss geforderten Eigenschaften herstellen, wenn ein oder mehrere Me-Salze, Eisen(III)-Chlorid und Alkalicarbonat miteinander vermischt werden und das erhaltene Gemenge auf eine Temperatur zwischen 800 °C und 1200 °C erhitzt und der sich dabei bildende isotrope Ferrit durch Auslaugen mit Wasser isoliert wird.

Bei der Ausarbeitung des erfindungsgemässen Verfahrens hat es sich als zweckmässig erwiesen, das oder die jeweiligen Me-Salze in Form der Chloride oder Carbonate einzusetzen. Dabei wird das Atommassenverhältnis von Eisen(III)- zu Me-Kation in den eingesetzten Salzen bereits entsprechend der vorgegebenen Formel eingesetzt. Weiterhin ist es vorteilhaft, wenn das Alkalicarbonat als Natrium- oder Kaliumcarbonat oder als Mischung aus beiden eingesetzt wird und in dem für die Reaktion vorgesehenen Gemenge ausserdem das Atommassenverhältnis von Na und K zu Cl 0,9 bis 1,4 beträgt. Nach der Herstellung der Mischung der einzelnen Reaktionskomponenten werden diese in bekannter Weise vermischt, zweckmässigerweise in einer Kugelmühle vermahlen, um eine homogene Verteilung der einzelnen Substanzen untereinander zu erreichen. Das intensiv gemischte und vermahlene Gemenge wird anschliessend 0,5 bis 3 Stunden lang auf eine Temperatur zwischen 800 und höchstens 1200 °C erhitzt. Nach dem Abkühlen wird der Schmelzkuchen mit Wasser behandelt, so dass sich der Alkalichloridanteil herauslöst und das Ferritpulver zurückbleibt.

Nach dem erfindungsgemässen Verfahren erhält man ein feinkörniges, unversintertes Ferritpulver vom Spinelltyp. Die Präparate bestehen aus isotropen oktaederförmigen Kristalliten mit gut und regelmässig ausgeprägtem Kistallhabitus und enger Teilchengrössenverteilung. Der Oktaederdurchmesser der Pulverteilchen kann durch die angewendete Reaktionstemperatur auf Werte zwischen 0,5 und 2,0 µm eingestellt werden, die spezifische Oberfläche nach BET variiert entsprechend zwischen 5 und 0,5 $m^2/g$.

Das Verfahren zeichnet sich gegenüber den bekannten Mischfällungsverfahren zur Gewinnung von kubischen Ferriten mit Spinellstruktur durch eine Reihe von verfahrenstechnischen Vereinfachungen aus. So entfällt das langwierige Abfiltrieren der Mischfällungsprodukte und das vorgegebene Fe/Me-Verhältnis bleibt unverändert, da keine Komponente durchs Filter laufen kann. Ausserdem entfällt das langwierige Auswaschen der Mischfällungsprodukte. Durch die Anwesenheit des Alkalichlorids beim Tempern wird ein Versintern der kubischen Ferritoktaeder verhindert, so dass die erhaltenen Pulver für eine Weiterverarbeitung nicht erst aufgemahlen werden müssen, wodurch Kristallfehler und ein breites Teilchengrössenspektrum eingeführt würden. Im Gegensatz zu den Produkten aus dem keramischen Verfahren oder dem Mischfällungsverfahren sind die nach dem erfindungsgemässen Verfahren erhaltenen Spinellpulver aus regelmässigen oktaederförmigen Kristalliten mit scharf ausgeprägtem Kristallhabitus zusammengesetzt. Dabei ist die Grösse der isotropen Teilchen durch die angewendete Reaktionstemperatur in einem weiten Bereich einstellbar, wobei die Teilchengrösse bemerkenswert einheitlich ausfällt.

Die genannten besonderen Teilcheneigenschaften haben eine gute Dispergierbarkeit in organischen Medien zur Herstellung von weichmagnetischen Farben oder Plastoferriten für Abschirmungszwecke zur Folge. Des weiteren zeichnen sich die nach dem erfindungsgemässen Verfahren erhaltenen Pulver durch eine gute Verdichtungscharakteristik beim biaxialen oder isostatischen Verdichten aus. Nach Sintern und biaxialem oder isostatischem Heisspressen dieser Presslinge wird eine Magnetkeramik für die Herstellung von Magnetferritköpfen mit einem einheitlichen Korngrössenspektrum erhalten, wobei gegenüber herkömmlicher Ferritkeramik verbesserte mechanische und magnetische Eigenschaften erzielt werden.

Ebenso vorteilhaft lassen sich mit dem erfindungsgemässen Verfahren die feinteiligen hexagonalen $Me^1_2Y$-Ferrite der allgemeinen Formel (II) $M^1_2Me^1_2Fe_{12}O_{22}$, in der $M^1$ Barium, Strontium, Calcium und/oder Blei und $Me^1$ zweiwertiges Mangan, Kupfer, Eisen, Kobalt, Nickel, Zink, Magnesium und/oder äquimolare Mengen von Lithium und dreiwertigen Eisen bedeuten, aus einer Schmelze von Natrium- und/oder Kaliumchlorid herstellen, wenn hierzu ein $M^1$-Chlorid oder -Carbonat, ein $Me^1$-Chlorid oder -Carbonat und Eisen(III)chlorid zusammen mit Natrium- und/oder Kaliumcarbonat vermischt und das erhaltene Gemenge auf eine Temperatur zwischen 800 und 1050 °C erhitzt und dann der dabei entstandene plättchenförmige hexagonale $Me^1_2Y$-Ferrit durch Auslaugen mit Wasser aus der entstandenen Schmelze von Natrium- und/oder Kaliumchlorid isoliert wird.

Bei der Durchführung des erfindungsgemässen Verfahrens hat es sich als zweckmässig herausgestellt, wenn im zu erhitzenden Salzgemenge folgende Molmassenverhältnisse vorliegen: $Fe(III)/M^1 = 5$ bis 6, $Fe(III)/Me^1 = 5$ bis 6 und Summe Na und K/Chlorid = 0,9 bis 1,4. Das vorgegebene Salzgemenge wird in bekannter Weise intensiv vermischt, üblicherweise in einer Kugelmühle vermahlen, damit eine homogene Verteilung der einzelnen Substanzen untereinander erreicht wird. Dieses Gemenge wird dann anschliessend auf eine Temperatur zwischen 800 und 1050 °C erhitzt und 0,5 bis 3 Stunden lang bei dieser Temperatur gehalten. Nach dem Abkühlen fällt ein Gemenge von $Me^1_2Y$ und Alkalichlorid an, dessen Salzanteil anschliessend mit Wasser herausgelöst wird.

Aufgrund des erfindungsgemässen Verfahrens lassen sich die $Me^1_2Y$-Ferrite unmittelbar als feinteilige, unversinterte Pulver gewinnen, die für eine weitere Verarbeitung nicht mehr aufgemahlen werden müssen. Sie bestehen aus sechseckigen Plättchen mit einem Durchmesser von etwa 1 bis 3 µm. Die bei etwa 900 °C erhaltenen Plättchen sind mit einem Durchmesser/Dicke-Verhältnis von ca. 30 extrem dünn. Mit steigender Temperatur tritt ein deutliches Plättchendickenwachstum auf, so dass bei einer Herstellungstemperatur von 1050 °C Plättchen mit einem Durchmesser/Dicke-Quotienten von ca. 10 anfallen. Die Werte für die spezifische Oberfläche nach BET liegen zwischen 1 und 7 $m^2/g$. Der $Zn_2Y$-Ferrit mit der Zusammensetzung $Ba_2Zn_2Fe_{12}O_{22}$ fällt bei 950 °C röntgenografisch einphasig mit einem $H_c$-Wert kleiner 2 kA/m an, die Sättigungsmagnetisierung beträgt 34 $nTm^3/g$. Die magnetische Messung erfolgt in einem Magnetfeld von 160 kA/m.

Die nach dem erfindungsgemässen Verfahren erhaltenen freifliessenden unversinterten plättchenförmigen Ferritpulver besitzen eine besonders gute Dispergierbarkeit, so dass sie besonders zur Herstellung von magnetischen Farben und Plastoferriten geeignet sind. Beim bi- oder uniaxialen trockenen oder nassen Verpressen der Magnetpulver zur Darstellung von weichmagnetischer Keramik für Hochfrequenzanwendungen tritt – insbesondere in Gegenwart eines Magnetfeldes – aufgrund des extrem plättchenförmigen Habitus der $Me^1{}_2Y$-Teilchen eine erwünschte hohe Ausrichtung der Plättchen senkrecht zur Pressrichtung auf.

Der Vorteil des erfindungsgemässen Verfahrens besteht darin, dass auf die technischen Verfahrensschritte des Lösens und Dispergierens der Ausgangssalze, des Mischfällens, des Filtrierens und Trocknens völlig verzichtet wird. Damit ist das erfindungsgemässe Verfahren einfacher und wirtschaftlicher durchzuführen als andere nach dem Stand der Technik.

In der gleichen vorteilhaften Weise lassen sich mit dem erfindungsgemässen Verfahren die hexagonalen Ferrite der allgemeinen Formel (III) $M^2(Me^2Ti)_xFe_{12-2x}O_{19}$, in der $M^2$ Barium oder Strontium, $Me^2$ Zink, Nickel und/oder Kobalt und x Werte von 0 bis 2,0 bedeuten, mit den aufgabengemäss geforderten Eigenschaften herstellen, wenn ein Barium- oder Strontiumsalz, Eisen(III)chlorid sowie gegebenenfalls ein Salz des Zinks, Nickels und/oder Kobalts und eine Titanverbindung zusammen mit Natrium- und/oder Kaliumcarbonat vermischt werden, das erhaltene Gemenge auf eine Temperatur zwischen 700 und 1100 °C erhitzt und dann der sich dabei bildende feinteilige plättchenförmige hexagonale Ferrit der genannten Zusammensetzung durch Auslaugen mit Wasser isoliert wird.

Zur Durchführung des erfindungsgemässen Verfahrens werden die einzelnen Komponenten in Pulverform in bekannter Weise vermischt, zweckmässigerweise in einer Kugelmühle vermahlen, um eine homogene Verteilung der einzelnen Substanzen untereinander zu erreichen. Bei den einzelnen Komponenten für das Reaktionsgemenge wird neben dem Eisen(III)chlorid für das Barium- oder Strontiumsalz vorzugsweise das entsprechende Chlorid oder Carbonat ausgewählt. Im Falle der Darstellung der substituierten Ferrite gemäss obengenannter Formel, d.h. für Werte von x grösser Null, hat es sich als vorteilhaft herausgestellt, Zink, Nickel und/oder Kobalt in Form ihrer Chloride oder Carbonate einzusetzen. Als Titanverbindung eignet sich sehr feinteiliges Titandioxid, das als sogenanntes Weisspigment bezeichnet wird. Die Molmassenverhältnisse im Reaktionsgemenge sind so gewählt, dass das Atommassenverhältnis von Eisen zu Barium oder Strontium 9 bis 12 beträgt. Ausserdem hat es sich als zweckmässig erwiesen, wenn das Verhältnis der Summen der Mole Natrium und Kalium zu der Summe der Mole Chloridionen 0,8 bis 1,4 beträgt.

Das intensiv gemischte und vermahlene Gemenge wird anschliessend auf 700 bis 1100 °C aufgeheizt und bei dieser Temperatur 0,5 bis 3 Stunden getempert. Nach dem Abkühlen fällt ein Gemenge aus Ferrit und Alkalichlorid an, dessen Salzanteil anschliessend mit Wasser herausgelöst wird.

Das erfindungsgemässe Verfahren unterscheidet sich von den bekannten Verfahren, bei denen im allgemeinen von $\alpha$-$Fe_2O_3$ ausgegangen wird, vor allem dadurch, dass erst bei der Reaktion der nichttoxidischen Ausgangskomponenten in situ ein äusserst feinteiliges und reaktives Eisenoxid entsteht. Gleichzeitig bildet sich als Nebenprodukt in feiner Verteilung Natriumchlorid und/oder Kaliumchlorid. Das Alkalichlorid schmilzt bei niedrigen Temperaturen, im Falle der eutektischen Zusammensetzung von NaCl und KCl schon bei etwa 650 °C und bildet eine katalytische flüssige Phase für den schnellen Transport der Reaktionskomponenten. Zum anderen verhindert der anfallende Salzanteil ein Versintern der entstehenden Ferritkristallite.

Aufgrund des erfindungsgemässen Verfahrens lassen sich diese Ferrite unmittelbar als feinkörnige, unversinterte Pulver gewinnen. Sie bestehen aus sechseckigen Plättchen, die je nach Reaktion – und Substitutionsbedingungen einen mittleren Durchmesser von 0,1 bis 0,7 µm besitzen. Die erhaltenen Pulver zeigen in der durchstrahlungs- und rasterelektronischen Aufnahme ein enges Teilchengrössenverteilungsspektrum. Die Werte für die spezifische Oberfläche nach BET ($S_{N2}$) liegen bei 1 bis 12 $m^2/g$. Für undotierten Bariumferrit werden Magnetpulverwerte von $H_c = 360$ kA/m und $M_r/\rho = 41$ $nTm^3/g$ erreicht, für reinen Strontiumferrit ergeben sich sogar $H_c$-Werte von 425 kA/m. Damit sind die nach dem erfindungsgemässen Verfahren hergestellten Pulver den auf herkömmlich keramischem Wege erhaltenen Präparaten in den magnetischen Eigenschaften überlegen.

Ausserdem weisen die erhaltenen freifliessenden Ferritpulver eine besonders gute Dispergierbarkeit auf, so dass sie besonders zur Herstellung von magnetischen Aufzeichnungsträgern geeignet sind. Bei der Herstellung von Magnetbändern mit magnetischer Ausrichtung in Längsrichtung des Bandes zeigen die undotierten Ferritpulver einen sehr hohen Richtfaktor von über 3. Dies ist bemerkenswert, da die auf herkömmlich keramischem Wege erhaltenen Ferritpulver im Magnetband nur Richtfaktoren von unter 2 aufweisen. Der hohe Richtfaktor führt zu den erwünschten hohen Werten für die remanente Magnetisierung.

Bei der Verarbeitung der hochkoerzitiven Ferritpulver zu magnetischen Aufzeichnungsträgern bleibt die Koerzitivfeldstärke erhalten, so dass sehr hochkoerzitive magnetische Aufzeichnungsträger hergestellt werden können. Aufgrund dieser hohen $H_c$-Werte ist es schwierig, eine einmal vorgenommene magnetische Aufzeichnung wieder zu verändern. Ausserdem sind die magnetischen Aufzeichnungen damit gegen Fremdfelder weitgehend unempfindlich und stabil. Besonders vorteilhaft ist, dass die beschriebenen Dotierungen der Ferrite gemäss der angegebenen Formel mit zunehmendem x eine Erniedrigung der Koerzitivfeldstärke und damit eine Anpassung der Bandkoerzitivfeldstärke an den Arbeitspunkt des Schreib- und Lesegerätes ermöglichen.

Die Erfindung sei anhand der folgenden Beispiele näher erläutert. Die in den Beispielen angegebenen magnetischen Werte wurden in einem Magnetfeld von 160 bzw. 800 kA/m bestimmt.

Beispiel 1

8,7 g $BaCO_3$, 5,7 g $ZnCl_2$, 38,9 g $FeCl_3$, 21,3 g $Na_2CO_3$ und 27,8 g $K_2CO_3$ werden 20 min lang in einer geschlossenen Fliehkraftkugelmühle intensiv vermahlen. Das Gemenge wird anschliessend 1 Stunde lang in einem Platintiegel auf 950 °C erhitzt. Der nach dem Abkühlen erhaltene Schmelzkuchen wird mit Wasser behandelt, abfiltriert und salzfrei gewaschen. Nach dem Trocknen liegt ein $Ba_2Zn_2Fe_{12}O_{22}$-Ferritpulver mit folgenden Eigenschaften vor: $H_c = 1,5$ kA/m, $M_s/\rho = 33$ nTm³/g $M_r/\rho = 7$ nTm³/g (Messfeld 160 kA/m). Die hexagonalen Kristallplättchen des Pulvers besitzen einen Durchmesser zwischen 1 und 3 µm.

Beispiel 2

Das Gemenge aus Beispiel 1 wird 1 Stunde lang bei 1000 °C erhitzt und nach dem Abkühlen wie in Beispiel 1 beschrieben aufgearbeitet. Man erhält ein $Zn_2Y$-Ferritpulver mit folgenden Eigenschaften: $H_c = 1,1$ kA/m, $M_s/\rho = 33$ nTm³/g, $M_r/\rho = 4$ nTm³/g (Messfeld 160 kA/m).

Beispiel 3

11,67 g Zinkhydroxidcarbonat mit einem Zinkgehalt von 56 Gew.-%, 17,48 g Mangan(II)-Hydroxidcarbonat mit einem Mangangehalt von 44 Gew.-%, 84,3 g $FeCl_3$, 41,3 g $Na_2CO_3$ und 53,9 g $K_2CO_3$ werden 20 min lang in einer geschlossenen Fliehkraftkugelmühle intensiv vermahlen. Das Gemenge wird anschliessend 1 h lang in einem Platintiegel auf 1050 °C erhitzt. Der nach dem Abkühlen erhaltene Schmelzkuchen wird mit Wasser behandelt, abfiltriert und salzfrei gewaschen. Nach dem Trocknen bei 110 °C liegt ein Manganzinkferritpulver vor, das im Röntgendiagramm einphasig ist und aus oktaederförmigen Kristalliten mit einem Teilchendurchmesser von 0,5 µm besteht. Die Magnetwerte betragen: $H_c = 1,5$ kA/m, $M_r/\rho = 5,8$ nTm³/g, $M_s/\rho = 62$ nTm³/g. Die magnetische Messung erfolgte in einem Magnetfeld mit $H_m = 160$ kA/m.

Beispiel 4

9,9 g $BaCO_3$, 81,1 g $FeCl_3$, 39,75 g $Na_2CO_3$ und 51,8 g $K_2CO_3$ werden 20 min lang in einer geschlossenen Fliehkraftkugelmühle intensiv vermahlen. Das Gemenge wird anschliessend 1 Stunde lang in einem Platintiegel auf 980 °C erhitzt. Der nach dem Abkühlen erhaltene Schmelzkuchen wird mit Wasser behandelt, abfiltriert und salzfrei gewaschen. Nach dem Trocknen bei 110 °C liegt ein Bariumferritpulver mit folgenden Eigenschaften vor: $H_c = 357$ kA/m, $M_r/\rho = 41$ nTm³/g, $S_{N_2} = 5,0$ m²/g (Messfeld 800 kA/m).

Beispiel 5

7,4 $SrCO_3$, 81,1 g $FeCl_3$, 39,75 g $Na_2CO_3$ und 51,83 g $K_2CO_3$ werden 20 min lang in einer geschlossenen Fliehkraftkugelmühle intensiv vermahlen. Das Gemenge wird anschliessend 1 Stunde lang in einem Platintiegel auf 960 °C erhitzt. Der nach dem Abkühlen erhaltene Schmelzkuchen wird mit Wasser behandelt, abfiltriert und salzfrei gewaschen. Nach dem Trocknen bei 110 °C liegt ein Bariumferritpulver mit folgenden Eigenschaften vor: $H_c = 423$ kA/m, $M_r/\rho = 41$ nTm³/g, $S = 3,7$ m²/g (Messfeld 800 kA/m).

Beispiel 6

11,8 g $BaCO_3$, 4,63 g basisches Zinkcarbonat mit 56,5 Gew.-% Zn, 3,21 g $TiO_2$ mit 59,6 Gew.-% Ti, 84,4 g $FeCl_3$, 41,3 g $Na_2CO_3$ und 53,9 g $K_2CO_3$ werden 20 min lang in einer geschlossenen Fliehkraftkugelmühle intensiv vermahlen. Das Gemenge wird anschliessend 1 Stunde lang in einem Platintiegel auf 850 °C erhitzt. Der nach dem Abkühlen erhaltene Schmelzkuchen wird mit Wasser behandelt, abfiltriert und salzfrei gewaschen. Nach dem Trocknen liegt ein mit Zink und Titan dotiertes Bariumferritpulver mit folgenden Eigenschaften vor: $H_c = 128$ kA/m, $H_R = 172$ kA/m, $M_r/\rho = 30$ nTm³/g, $S = 9,5$ m²/g (Messfeld 800 kA/m).

Beispiel 7

Es wird ein Salzgemenge wie in Beispiel 6 hergestellt und abweichend von Beispiel 6 1 Stunde lang bei 950 °C erhitzt. Nach Auswaschen und Trocknen liegt ein mit Zink und Titan dotiertes Bariumferritpulver mit folgenden Eigenschaften vor: $H_c = 138$ kA/m, $H_R = 187$ kA/m, $M_r/\rho = 31$ nTm³/g, $S = 5,7$ m²/g (Messfeld 800 kA/m).

Beispiel 8

11,8 g $BaCO_3$, 4,14 g basisches Cobaltcarbonat mit 49,8 Gew.-% Co, 2,81 g $TiO_2$ mit 59,6 Gew.-% Ti, 86,0 g $FeCl_3$, 42,1 g $Na_2CO_3$ und 54,9 g $K_2CO_3$ werden 20 min lang in einer geschlossenen Fliehkraftkugelmühle intensiv vermahlen. Das Gemenge wird anschliessend 1 Stunde lang in einem Platintiegel auf 900 °C erhitzt. Der nach dem Abkühlen erhaltene Schmelzkuchen wird mit Wasser behandelt, abfiltriert und salzfrei gewaschen.

Nach dem Trocknen liegt ein mit Cobalt und Titan dotiertes Bariumferritpulver mit folgenden Eigenschaften vor: $H_c = 76,4$ kA/m, $H_R = 103,7$ kA/m, $M_r/\rho = 32$ nTm³/g, S = 6,0 m²/g (Messfeld 800 kA/m).

Beispiel 9

Es wird ein Salzgemenge wie in Beispiel 8 hergestellt und abweichend von Beispiel 8 1 Stunde lang bei 1000 °C erhitzt. Nach Auswaschen und Trocknen liegt ein mit Cobalt und Titan dotiertes Bariumferritpulver mit folgenden Eigenschaften vor: $H_c = 90$ kA/m, $H_R = 120$ kA/m, $M_r/\rho = 32$ nTm³/g, S = 4,9 m²/g (Messfeld 800 kA/m).

Beispiel 10

400 Teile eines gemäss Beispiel 4 hergestellten Bariumferritpulvers mit $H_c = 357$ kA/m werden mit 100 Teilen einer 20%igen Lösung eines Copolymerisats aus 80% Vinylchlorid, 10% Dimethylmaleinat und 10% Diethylmaleinat in einem Gemisch aus gleichen Teilen Tetrahydrofuran und Dioxan, 103 Teilen einer 13%igen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 24 Teilen eines handelsüblichen anionenaktiven Netzmittels auf Basis Phosphorsäureester und 231 Teilen des genannten Lösungsmittelgemisches gemischt und 6 Stunden lang in einer Schüttelkugelmühle mit Hilfe von Stahlkugeln mit einem Durchmesser von 2 mm dispergiert. Danach wird mit 199 Teilen der oben erwähnten 13%igen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 35 Teilen des genannten Lösungsmittelgemisches, 0,3 Teilen Stearinsäure, 0,3 Teilen eines handelsüblichen Silikonöls und 0,6 Teilen Hydrochinon versetzt und weitere 2 Stunden dispergiert. Danach wird die Dispersion filtriert und in bekannter Weise auf eine 6 µm dicke Polyethylenterephthalatfolie in einer solchen Stärke aufgetragen, dass nach dem Ausrichten der plättchenförmigen Teilchen durch Vorbeiführen an einem Magnetfeld und anschliessendem Trocknen und Kalandrieren eine Magnetschicht mit einer Schichtdicke von 5,7 µm verbleibt. Am Magnetband wurden folgende Werte gemessen: $H_c = 319$ kA/m, $H_R = 335$ kA/m, $M_r = 183$ mT, $M_s = 213$ mT, Richtfaktor = 3,2 (Messfeld 800 kA/m).

Beispiel 11

Das in Beispiel 9 dargestellte, mit Cobalt und Titan dotierte Bariumferritpulver mit $H_c = 90$ kA/m wird analog Beispiel 10 zu einem Magnetband verarbeitet. Am Magnetband wurden folgende Werte gemessen: $H_c = 107$ kA/m, $H_R = 115$ kA/m, $M_r = 145$ mT, $M_s = 201$ mT, Richtfaktor = 2,5, Schichtdicke = 5,8 µm (Messfeld 800 kA/m).

**Patentansprüche**

1. Verfahren zur Herstellung von feinteiligen Ferriten der allgemeinen Formel

$$MeFe_2O_4 \qquad (I)$$

in der Me = aMn + bNi + cZn + dCo + eFe(II) bedeutet, wobei die Atommassenverhältnisse a, b, c, d und e jeweils 0 bis 1 betragen und ihre Summe gleich 1 ist,

$$M^1_2Me^1_2Fe_{12}O_{22} \qquad (II)$$

in der $M^1$ Barium, Strontium, Calcium und/oder Blei und $Me^1$ zweiwertiges Mangan, Kupfer, Eisen, Kobalt, Nickel, Zink, Magnesium und/oder äquimolare Mengen von Lithium und dreiwertigem Eisen bedeuten, oder

$$M^2(Me^2Ti)_xFe_{12-2x}O_{19} \qquad (III)$$

in der $M^2$ Barium oder Strontium, $Me^2$ Zink, Nickel und/oder Kobalt und x Werte von 0 bis 2,0 bedeuten, dadurch gekennzeichnet, dass die für die jeweilige, den Formeln (I), (II) oder (III) entsprechende Zusammensetzung erforderlichen Me, $Me^1$, $Me^2$, $M^1$ und/oder $M^2$-Salze sowie gegebenenfalls eine Titanverbindung zusammen mit Eisen(III)-chlorid und Natrium- und/oder Kaliumcarbonat vermischt, das erhaltene Gemenge auf eine Temperatur zwischen 700 und 1200 °C erhitzt und der sich dabei bildende feinteilige Ferrit der vorgegebenen Zusammensetzung durch Auslaugen mit Wasser isoliert wird.

2. Verfahren zur Herstellung isotroper Ferritpulver mit Spinellstruktur der allgemeinen Formel $MeFe_2O_4$ (I), in der Me = aMn + bNi + cZn + dCo + eFe(II) bedeutet, wobei die Atommassenverhältnisse a, b, c, d und e jeweils 0 bis 1 betragen und ihre Summe gleich 1 ist, dadurch gekennzeichnet, dass ein oder mehrere Me-Salze, Eisen(III)chlorid und Natrium- und/oder Kaliumcarbonat miteinander vermischt werden und das erhaltene Gemenge auf eine Temperatur zwischen 800° und 1200 °C erhitzt und der sich dabei bildende isotrope Ferrit durch Auslaugen mit Wasser isoliert wird.

3. Verfahren zur Herstellung von hexagonalen $Me^1_2Y$-Ferriten der allgemeinen Formel $M^1_2Me^1_2Fe_{12}O_{22}$ (II), in der $M^1$ Barium, Strontium, Calcium und/oder Blei und $Me^1$ zweiwertiges Mangan, Kupfer, Eisen, Kobalt, Nickel, Zink, Magnesium und/oder äquimolare Mengen von Lithium und dreiwertigem Eisen bedeuten, dadurch gekennzeichnet, dass ein $M^1$-Chlorid oder -Carbonat, ein $Me^1$-Chlorid oder -Carbonat und Eisen(III)chlorid zusammen mit Natrium- und/oder Kaliumcarbonat vermischt und das erhaltene Gemenge auf eine Temperatur zwischen 800 und 1050 °C erhitzt wird und dann der dabei entstandene plättchenförmige hexagonale $Me^1_2Y$-Ferrit durch Auslaugen mit Wasser aus der entstandenen Schmelze aus Natrium und/oder Kaliumchlorid isoliert wird.

4. Verfahren zur Herstellung feinteiliger hexagonaler Ferrite der allgemeinen Formel $M^2(Me^2Ti)_xFe_{12-2x}O_{19}$ (III), in der $M^2$ Barium oder Strontium, $Me^2$ Zink, Nickel und/oder Kobalt und x Werte von 0 bis 2,0 bedeuten, dadurch gekennzeichnet, dass ein Barium- oder Strontiumsalz, Eisen(III)chlorid sowie gegebenenfalls ein Salz des Zinks, Nickels und/oder Kobalts und eine Titanverbindung zusammen mit Natrium- und/oder Kaliumcarbonat vermischt werden, das erhaltene Gemenge auf eine Temperatur zwischen 700 und 1100 °C erhitzt und dann der sich dabei bildende feinteilige plättchenförmige hexagonale Ferrit der genannten Zusammensetzung durch Auslaugen mit Wasser isoliert wird.

**Claims**

1. A process for the preparation of a finely divided ferrite of the general formula

$$MeFe_2O_4 \quad (I),$$

where Me = aMn + bNi + cZn + dCo + eFe(II), and the atomic weight ratios a, b, c, d and e are each from 0 to 1 and their sum is 1, or

$$M^1_2Me^1_2Fe_{12}O_{22} \quad (II),$$

where $M^1$ is barium, strontium, calcium and/or lead, and $Me^1$ is divalent manganese, copper, iron, cobalt, nickel, zinc, magnesium and/or equimolar amounts of lithium and trivalent iron, or

$$M^2(Me^2Ti)_xFe_{12-2x}O_{19} \quad (III)$$

where $M^2$ is barium or strontium, $Me^2$ is zinc, nickel and/or cobalt and x is from 0 to 2.0, wherein the Me, $Me^1$, $M^2$, $M^1$ and/or $M^2$ salts required for the particular composition corresponding to the formula (I), (II) or (III), and, if desired, a titanium compound are mixed with iron(III) chloride and sodium carbonate and/or potassium carbonate, the mixture obtained is heated at from 700 to 1200 °C and the resulting finely divided ferrite of the predetermined composition is isolated by leaching with water.

2. A process for the preparation of an isotropic ferrite powder having a spinel structure, of the general formula $MeFe_2O_4$ (I), where Me = aMn + bNi + cZn + dCo + eFe(II), and the atomic weight ratios a, b, c, d and e are each from 0 to 1 and their sum is 1, wherein one or more Me salts, iron(III) chloride and sodium carbonate and/or potassium carbonate are mixed together, the mixture obtained is heated at from 800 to 1200 °C and the resulting isotropic ferrit is isolated by leaching with water.

3. A process for the preparation of a hexagonal $Me^1_2Y$ ferrite of the general formula $M^1_2Me^1_2$ $Fe\text{-}_{12}O_{22}$ (II), where $M^1$ is barium, strontium, calcium and/or lead and $Me^1$ is divalent manganese, copper, iron, cobalt, nickel, zinc, magnesium and/or equimolar amounts of lithium and trivalent iron wherein an $M^1$ chloride or carbonate, an $Me^1$ chloride or carbonate, iron(III) chloride and sodium carbonate and/or potassium carbonate are mixed, the mixture obtained is heated at from 800 to 1050 °C and the platelet-like hexagonal $Me^1_2Y$ ferrite formed is then isolated from the resulting melt of sodium chloride and/or potassium chloride by leaching with water.

4. A process for the preparation of a finely divided hexagonal ferrite of the general formula $M^2(Me^2Ti)_xFe_{12-2x}O_{19}$ (III), where $M^2$ is barium or strontium, $Me^2$ is zinc, nickel and/or cobalt and x is from 0 to 2.0, wherein a barium or strontium salt, iron(III) chloride and, if desired, a salt of zinc, nickel and/or cobalt and a titanium compound are mixed with sodium carbonate and/or potassium carbonate, the mixture obtained is heated at from 700 to 1100 °C and the resulting finely divided platelet-like hexagonal ferrite of the said composition is then isolated by leaching with water.

**Revendications**

1. Procédé de préparation de ferrites finement divisés, de formule générale

$$MeFe_2O_4 \quad (I)$$

dans laquelle Me représente = aMn + bNi + cZn + dCo + eFe(II) les rapports de masses atomiques a, b, c, d et e étant chacun de 0 à 1 et leur somme égale à 1

$$M^1_2Me^1_2Fe_{12}O_{22} \quad (II)$$

dans laquelle $M^1$ représente baryum, strontium, calcium et/ou plomb et $Me^2$ représente manganèse, cuivre, fer, cobalt, nickel, zinc, magnésium bivalents et/ou des quantités équimolaires de lithium et de fer trivalent, ou

$$M^2(Me^2Ti)_xFe_{12-2x}O_{19} \quad (III)$$

où $M^2$ représente baryum ou strontium, $Me^2$, zinc, nickel et/ou cobalt et x une valeur de 0 à 2,0, caractérisé par le fait que l'on mélange les sels de Me, $Me^1$, $Me^2$, $M^1$ et/ou $M^2$ nécessaires pour la composition des formules respectives (I), (II) ou (III), ainsi qu'éventuellement un composé de titane, avec du chlorure de fer(III) et du carbonate de sodium et/ou potassium, on chauffe le mélange obtenu à une température comprise entre 700 et 1200 °C et on isole par épuisement à l'eau le ferrite finement divisé, ainsi obtenu, de la composition indiquée.

2. Procédé de préparation de poudre de ferrite isotrope à structure de spinelles, de formule générale $MeFe_2O_4$ (I), dans laquelle Me représente = aMn + bNi + cZn + dCo + eFe(II), les rapports de masses atomiques a, b, c, d et e étant chacun de 0 à 1 et leur somme égale à 1, caractérisé par le fait qu'on mélange ensemble un ou plusieurs sels de Me, du chlorure de fer(III) et du carbonate de sodium et/ou potassium, on chauffe le mélange

obtenu à une température comprise entre 800 et 1200 °C et on isole le ferrite isotrope, qui s'est formé, par épuisement à l'eau.

3. Procédé de préparation de ferrites $Me^1_2Y$ hexagonaux de formule générale $M^1_2Me^1_2Fe_{12}O_{22}$ (II), dans laquelle $M^1$ représente baryum, strontium, calcium et/ou plomb et $Me^1$ représente manganèse, cuivre, fer, cobalt, nickel, zinc, magnésium bivalents et/ou des quantités équimolaires de lithium et de fer trivalent, caractérisé par le fait qu'on mélange un chlorure ou carbonate de $M^1$, un chlorure ou carbonate de $Me^1$ et un chlorure de fer(III) avec du carbonate de sodium ou potassium, on chauffe le mélange obtenu à une température comprise entre 800 et 1050 °C, puis on isole, par épuisement à l'eau, de la masse fondue de chlorure de sodium et/ou potassium résultants, le ferrite $Me^1_2Y$ hexagnoal, en plaquettes, obtenu.

4. Procédé de préparation de ferrites hexagonaux finement divisés, de la formule générale $M^2(Me^2Ti)_xFe_{12-2x}O_{19}$ (III) dans laquelle $M^2$ représente baryum ou strontium, $Me^2$, zinc, nickel et/ou cobalt et x représente une valeur de 0 à 2,0, caractérisé par le fait que l'on mélange un sel de baryum ou de strontium, du chlorure de fer(III) et éventuellement un sel de zinc, nickel et/ou cobalt et un composé de titane, avec du carbonate de sodium et/ou potassium, on chauffe le mélange obtenu à une température comprise entre 700 et 1100 °C puis on isole, par épuisement à l'eau, le ferrite hexagonal, en plaquettes, finement divisé, qui s'est formé.